# FASCICULE DE BREVET EUROPEEN

(11) **EP 3 853 574 B1**
(45) Date de publication et mention de la délivrance du brevet: **11.10.2023**
(21) Numéro de dépôt: 19766263.8
(22) Date de dépôt: 16.09.2019
(51) Int. Cl.: G01M 3/28, F16J 15/00

(54) **SYSTÈME DE TEST DE L'ÉTANCHÉITÉ D'UN PRESSE-ÉTOUPE DE TRAVERSÉE D'UNE CLOISON NOTAMMENT D'UN CONNECTEUR ÉLECTRIQUE IMMERGEABLE**
DICHTHEITSPRÜFSYSTEM FÜR EINE KABELVERSCHRAUBUNGSDURCHFÜHRUNG EINER TRENNWAND, INSBESONDERE EINES EINTAUCHBAREN ELEKTRISCHEN STECKVERBINDERS
TIGHTNESS TESTING SYSTEM FOR A CABLE GLAND FEED-THROUGH OF A PARTITION IN PARTICULAR OF AN IMMERSIBLE ELECTRICAL CONNECTOR

(30) Priorité: 17.09.2018 FR 1858364
(43) Date de publication de la demande: 28.07.2021
(73) Titulaire: NAVAL Group, 75015 Paris (FR)
(72) Inventeur: PRISER, Mathieu, 75015 PARIS (FR); CHIFFOLEAU, Alexander, 75015 PARIS (FR); BOURGET, Jean-Christophe, 75015 PARIS (FR)
(74) Mandataire: Lavoix
(86) Numéro de dépôt international: PCT/EP2019/074605
(87) Numéro de publication internationale: WO 2020/058148

(56) Documents cités:
- EP-B1- 3 256 766
- DE-U1- 29 712 576
- FR-A- 1 176 294
- GB-A- 2 143 596
- US-A- 2 936 187
- US-A- 3 907 307
- US-B1- 6 394 464

## Description

La présente invention concerne un système de test de l'étanchéité d'un presse-étoupe de traversée d'une cloison comme par exemple d'un connecteur électrique immergeable.

On connait par exemple des documents FR 1 176 294 et US 3 907 307, des moyens d'étanchéité de façon générale pour ces applications.

De façon plus spécifique, le document FR 1 176 294 concerne un dispositif d'indication et de mesure de la quantité d'un fluide traversant un presse-étoupe et le document US 3 907 307 concerne des moyens d'étanchéité dans lesquels un lubrifiant est injecté à travers un passage par une pompe.

D'autres états de la technique sont connus par GB 2 143 596 A, US 6 394 464 B1, DE 297 12 576 U1, US 2 936 187 A et EP 3 256 766 B1.

De tels connecteurs peuvent être constitués par exemple par des connecteurs appelés communément « connecteurs DRYM ».

De tels connecteurs sont par exemple utilisés pour raccorder des éoliennes offshore à un réseau de distribution d'électricité.

Bien entendu d'autres utilisations encore de ces connecteurs peuvent être envisagées.

Ce type de connecteurs comporte en particulier une cloison de passage d'organes allongés tels que des câbles, des fibres ou autres, et dont l'étanchéité est assurée par un presse-étoupe.

Le connecteur comporte alors un corps de presse-étoupe dans lequel sont placés des moyens d'étanchéité et un refouloir de presse-étoupe permettant de comprimer ces moyens d'étanchéité autour de l'organe traversant la cloison, afin d'obtenir l'étanchéité voulue.

Aujourd'hui, l'étanchéité du montage des moyens d'étanchéité et du ou des presse-étoupes de tels connecteurs, est vérifiée par exemple en mettant en oeuvre un contrôle d'étanchéité à l'hélium.

A cet effet, on tire au vide l'enceinte étanche du connecteur, puis on procède à une aspersion d'hélium sur les zones à inspecter, et enfin on réalise une analyse du débit de fuite par une spectrométrie de masse.

On conçoit qu'un tel procédé nécessite un appareillage extrêmement lourd et qui doit être manipulé par des opérateurs très qualifiés.

Chaque connecteur devant être vérifié individuellement, ces opérations représentent également un coût important et un temps supplémentaire dans le processus de qualification des connecteurs.

Le but de l'invention est donc de résoudre ces problèmes en proposant un système de test qui soit fiable, facile et rapide à mettre en oeuvre et peu coûteux en argent et en temps.

A cet effet, l'invention a pour objet un système de test de l'étanchéité d'un presse-étoupe de traversée d'une cloison notamment d'un connecteur électrique immergeable, du type comportant un corps de presse-étoupe dans lequel sont placés des moyens d'étanchéité et un refouloir de presse-étoupe pour comprimer les moyens d'étanchéité, caractérisé en ce qu'il comporte une bague de test d'étanchéité insérée dans les moyens d'étanchéité et munie d'un perçage en regard d'un trou du corps de presse-étoupe débouchant sur celui-ci et muni de moyens de raccordement à une source de pression/dépression permettant de tester l'étanchéité du presse-étoupe.

Suivant d'autres caractéristiques du système selon l'invention, prise seules ou en combinaison :
- les moyens d'étanchéité présentent la forme d'un manchon déformable ;
- les moyens d'étanchéité comprennent un empilement de joints annulaires en V montés tête-bêche les uns à la suite des autres et en ce que la bague de test est insérée dans cet empilement de joints annulaires ;
- le trou du corps de presse-étoupe débouche transversalement sur celui-ci ;
- le trou du corps de presse-étoupe comporte à son extrémité un raccord ;
- la bague de test est une bague métallique.

L'invention sera mieux comprise à la lecture de la description qui va suivre, donnée uniquement à titre d'exemple, et faite en référence aux dessins annexés, sur lesquels :
- la figure 1 représente une vue en coupe de côté d'une cloison notamment d'un connecteur électrique immergeable équipé d'un système de test d'étanchéité selon l'invention ;
- la figure 2 représente une vue à échelle agrandie d'une partie de cette cloison, et ;
- la figure 3 représente une vue en coupe d'une bague de test entrant dans la constitution d'un système selon l'invention.

On a en effet illustré sur ces figures, un système de test d'étanchéité d'un presse-étoupe de traversée d'une cloison comme par exemple d'un connecteur électrique immergeable.

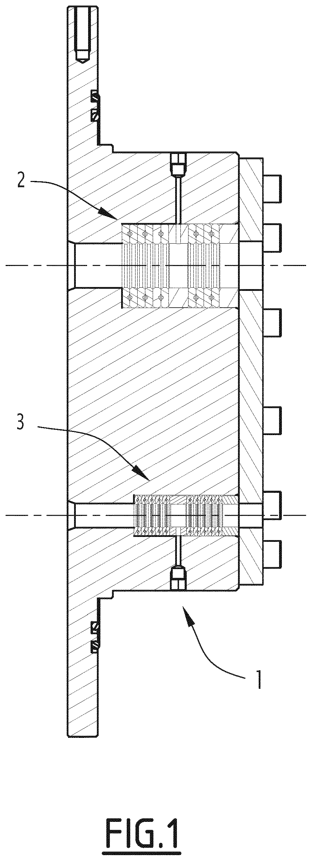

Cette cloison est par exemple désignée par la référence générale 1 sur ces figures et en particulier sur la figure 1.

Le reste du connecteur n'est pas représenté sur ces figures pour des questions de clarté.

La cloison est munie d'au moins un presse-étoupe de traversée étanche d'un ou de plusieurs organes allongés tels que par exemple des câbles électriques, des fibres ou autres.

Dans l'exemple, deux presse-étoupes sont illustrés sur cette figure 1 et sont désignés par les références 2 et 3.

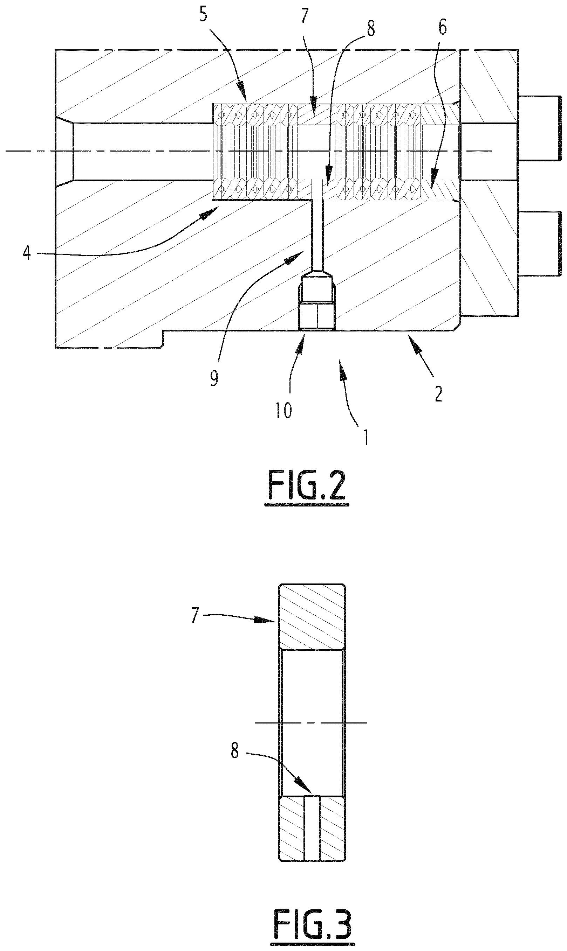

En fait, le ou chaque presse-étoupe de la cloison comporte alors un corps de presse-étoupe, désigné par exemple par la référence 4 sur la figure 2 pour le presse-étoupe 2, dans lequel sont placés des moyens d'étanchéité désignés par la référence générale 5.

Ces moyens d'étanchéité présentent la forme générale d'un manchon déformable comprenant par exemple un empilement de joints annulaires en V, montés tête-bêche les uns à la suite des autres.

Le presse-étoupe par exemple 2, comporte également un refouloir de presse-étoupe désigné par la référence générale 6 sur cette figure 2, permettant de comprimer les moyens d'étanchéité autour de l'organe traversant la cloison, afin d'assurer l'étanchéité de cette traversée.

Comme cela est illustré en particulier sur ces figures 2 et 3, le système de test selon l'invention comporte une bague de test d'étanchéité, désignée par la référence générale 7 sur ces figures, qui est insérée dans les moyens d'étanchéité du presse-étoupe.

En fait, la bague de test est insérée dans l'empilement de joints annulaires de ces moyens, comme cela a été décrit précédemment.

Cette bague de test comporte un perçage radial désigné par la référence générale 8, en regard d'un trou radial 9 du corps de presse-étoupe, débouchant sur celui-ci et muni de moyens de raccordement à une source de pression/dépression permettant de tester l'étanchéité du presse-étoupe.

Ces moyens de raccordement présentent n'importe quelle structure appropriée et sont désignés par la référence générale 10 sur cette figure 2 par exemple pour le presse-étoupe 2.

La bague de test peut par exemple être une bague métallique ou autre et le trou 9 du corps de presse-étoupe peut déboucher transversalement sur celui-ci comme cela est illustré.

Ainsi, les moyens de raccordement 10 permettent de raccorder le presse-étoupe par exemple à une source d'air sous pression, pour permettre de s'assurer de la qualité de l'étanchéité en surveillant l'évolution de la pression appliquée à celui-ci.

On peut par exemple considérer que l'étanchéité de presse-étoupe est acceptable si on ne constate aucune chute de pression pendant par exemple dix minutes.

Bien entendu d'autres modes de réalisation encore de ce système peuvent être envisagés.

## Revendications

1. Système de test de l'étanchéité d'un presse-étoupe de traversée d'une cloison notamment d'un connecteur électrique immergeable, du type comportant un corps de presse-étoupe (4) dans lequel sont placés des moyens d'étanchéité (5) et un refouloir de presse-étoupe (6) pour comprimer les moyens d'étanchéité, **caractérisé en ce qu'**il comporte une bague de test d'étanchéité (7) insérée dans les moyens d'étanchéité (5) et munie d'un perçage (8) en regard d'un trou (9) du corps de presse-étoupe débouchant sur celui-ci et muni de moyens de raccordement (10) à une source de pression/dépression permettant de tester l'étanchéité du presse-étoupe.

2. Système de test selon la revendication 1, **caractérisé en ce que** les moyens d'étanchéité (5) présentent la forme d'un manchon déformable.

3. Système de test selon la revendication 2, **caractérisé en ce que** les moyens d'étanchéité (5) comprennent un empilement de joints annulaires en V montés tête-bêche les uns à la suite des autres et **en ce que** la bague de test (7) est insérée dans cet empilement de joints annulaires.

4. Système de test selon l'une quelconque des revendications précédentes, **caractérisé en ce que** le trou (9) du corps de presse-étoupe débouche transversalement sur celui-ci.

5. Système de test selon l'une quelconque des revendications précédentes, **caractérisé en ce que** le trou (9) du corps de presse-étoupe comporte à son extrémité un raccord (10).

6. Système de test selon l'une quelconque des revendications précédentes, **caractérisé en ce que** la bague de test est une bague métallique.

## Patentansprüche

1. Dichtheitsprüfsystem für eine Kabelverschraubungsdurchführung einer Trennwand, insbesondere für einen eintauchbaren elektrischen Steckverbinder des Typs, der einen Kabelverschraubungskörper (4) umfasst, in dem Dichtungsmittel (5) platziert sind, und einen Kabelverschraubungsansetzer (6) zum Komprimieren der Dichtungsmittel, **dadurch gekennzeichnet, dass** es einen Dichtheitstestring (7) aufweist, der in die Dichtungsmittel (5) eingesetzt und mit einer Bohrung (8) versehen ist, die einem Loch (9) des Kabelverschraubungskörpers zugewandt ist, das auf dieser ausmündet und mit Mitteln (10) zum Anschluss an eine Druck-/Unterdruckquelle versehen ist, die gestattet, die Dichtheit der Kabelverschraubung zu testen.

2. Testsystem nach Anspruch 1, **dadurch gekennzeichnet, dass** die Dichtungsmittel (5) die Form einer verformbaren Hülse aufweisen.

3. Testsystem nach Anspruch 2, **dadurch gekennzeichnet, dass** die Dichtungsmittel (5) einen Stapel V-förmiger Ringdichtungen umfassen, die Kopf an Fuß hintereinander angebracht sind und dass der Testring (7) in diesen Ringdichtungsstapel eingesetzt ist.

4. Testsystem nach einem der vorhergehenden Ansprüche, **dadurch gekennzeichnet, dass** das Loch (9) des Kabelverschraubungskörpers quer auf diesem mündet.

5. Testsystem nach einem der vorhergehenden Ansprüche, **dadurch gekennzeichnet, dass** das Loch (9) des Kabelverschraubungskörpers an seinem Ende ein Verbindungsstück (10) aufweist.

6. Testsystem nach einem der vorhergehenden Ansprüche, **dadurch gekennzeichnet, dass** der Testring ein Metallring ist.

## Claims

1. A tightness testing system for a cable gland feed-through of a partition, in particular of an immersible electrical connector, of the type comprising a cable gland body (4) in which sealing means (5) are placed and a cable gland rammer (6) for compressing the sealing means **characterized in that** it comprises a sealing testing ring (7) inserted in the sealing means (5) and provided with a hole (8) opposite a hole (9) in the gland body opening onto the latter and provided with means (10) for connection to a pressure/vacuum source making it possible to test the sealing of the gland.

2. The testing system according to claim 1, **characterized in that** the sealing means (5) have the form of a deformable sleeve.

3. The testing system according to claim 2, **characterized in that** the sealing means (5) comprise a stack of V-shaped annular seals mounted head-to-tail one after the other and **in that** the test ring (7) is inserted into this stack of annular seals.

4. The testing system according to any one of the preceding claims, **characterized in that** the hole (9) of the gland body opens transversely onto the same.

5. The testing system according to any one of the preceding claims, **characterized in that** the hole (9) of the gland body has a connector (10) at its end.

6. The testing system according to any of the preceding claims, **characterized in that** the testing ring is a metal ring.
